## Europäisches Patentamt

## European Patent Office

## Office européen des brevets

(19)

(11) Veröffentlichungsnummer: **0 129 087**
**B1**

(12) **EUROPÄISCHE PATENTSCHRIFT**

(45) Veröffentlichungstag der Patentschrift:
26.08.87

(51) Int. Cl.⁴: **F 21 Q 3/00,** H 02 B 1/04

(21) Anmeldenummer: **84105824.1**

(22) Anmeldetag: **22.05.84**

(54) **Signalleuchtengehäuse.**

(30) Priorität: **10.06.83 CH 3194/83**

(43) Veröffentlichungstag der Anmeldung:
**27.12.84 Patentblatt 84/52**

(45) Bekanntmachung des Hinweises auf die Patenterteilung:
**26.08.87 Patentblatt 87/35**

(84) Benannte Vertragsstaaten:
**AT BE DE FR GB IT LU NL SE**

(56) Entgegenhaltungen:
**DE - A - 2 951 081**
**US - A - 3 213 189**
**US - A - 3 706 869**

(73) Patentinhaber: **W. Schmid AG, Dorfstrasse 23,
CH-5442 Fislisbach (CH)**

(72) Erfinder: **Schmid, Willi, Dorfstrasse 23,
CH-5442 Fislisbach (CH)**

(74) Vertreter: **Fillinger, Peter, Dr., Rütistrasse 1a,
CH-5400 Baden (CH)**

## Beschreibung

Die vorliegende Erfindung bezieht sich auf ein Signalleuchtengehäuse gemäss dem Oberbegriff des Patentanspruchs 1.

Ein solches Signalleuchtengehäuse ist beispielsweise in der DE-A-2 951 081 und in der EP-A-0 110 218 beschrieben. Bei diesen weisen die Raststellen der Rastnasen eines Signalleuchtengehäuses den gleichen Abstand zur Frontplatte auf, was zum Nachteil führt, dass für jede mögliche Dicke von Schalttafelfrontplatten unterschiedliche Signalleuchtengehäuse an Lager zu halten sind, bei denen lediglich die Länge der Rastfedern bzw. der Abstände der Raststellen von der Gehäusefrontplatte verschieden sind.

Aus den US-A-3 706 869 und US-A-3 213 189 ist es bekannt, die auf der Frontplattenrückseite angeordneten Rastfedern hakenförmig gekrümmt auszuführen, was bei geringer Belastung einen grossen Federweg ergibt, wodurch das in eine Schalttafel eingebaute Gehäuse keine hinreichende Stabilität gegen ein Verschieben oder Verdrehen hat. Es besteht somit die Gefahr, dass die Schaltergehäus verschoben werden und ihre winkelgerechte Lage verlieren und das Aussehen einer solchen Schalttafel in unannehmbarer Weise beeinträchtigen. Zur Vermeidung dieses Nachteils sind Zentrierkörper vorhanden. Diese setzen aber voraus, dass die in der Schalttafel für das Einsetzen des Schaltergehäuses vorgesehene Durchbrechung sehr massgenau sein muss, damit sie ihre Funktion erfüllen können.

Ein weiterer Nachteil besteht darin, dass solcherart befestigte Schalter von der Schalttafelvorderseite her nicht mehr abgezogen werden können. Die Rastfedern müssen von der Schalttafelrückseite her zusammengekniffen und mit dem Schaltergehäuse nach vorne herausgedrückt werden.

Die vorliegende Erfindung stellt sich die Aufgabe, ein Signalleuchtengehäuse der erwähnten Art derart zu verbessern, dass es in Schalttafelfrontwände unterschiedlicher Dicke einsetzbar ist.

Erfindungsgemäss wird diese Aufgabe gelöst durch die kennzeichnenden Merkmale des Patentanspruchs 1.

Sind die Raststellen der Rastfedern als Rastnasen ausgebildet, so ergibt sich der Vorteil, dass die nicht für die Rastverbindung benötigten Rastfedern bei dickeren Schalttafelfrontwänden elastisch federnd gegen die Wand der Durchbrechungen drücken und damit die beim Ausschneiden oder Ausstanzen der Durchbrechungen entstehenden Masstoleranzen ausgleichen.

Eine besonders gute Verbindung mit der Schalttafelfrontwand ergibt sich, wenn diese aus einer Kunststofftafel besteht, in der die Durchbrechungen für die Befehls- und Meldegeräte ausgebrochen und die Durchbrechungsränder unregelmässig sind. Eine ebenfalls gute Verbindung ist gewährleistet, wenn die Ränder einer ausgestanzten Durchbrechung in der Schalttafelfrontwand stark eingezogen sind.

Anhand der beiliegenden schematischen Zeichnung wird die Erfindung beispielsweise erläutert. Es zeigen:

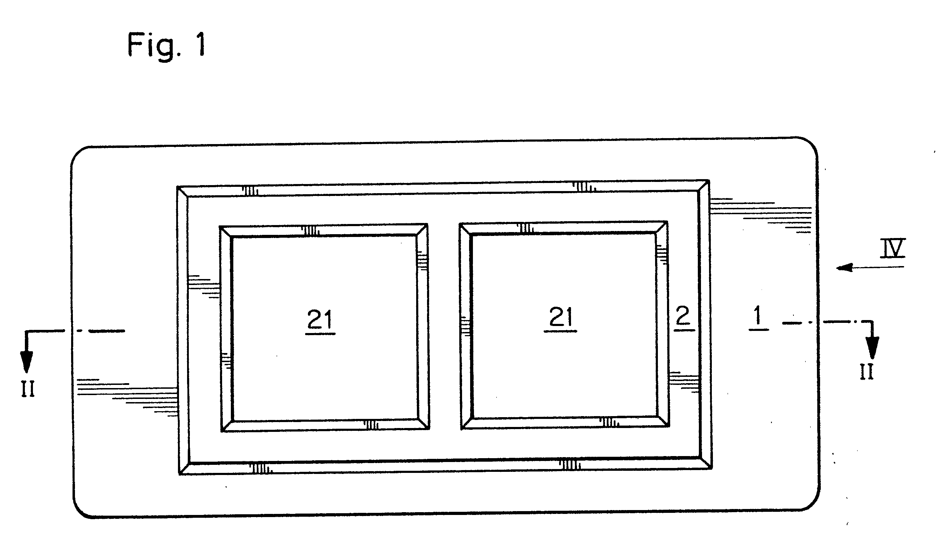

Fig. 1 eine Vorderansicht eines Signalleuchtengehäuses,

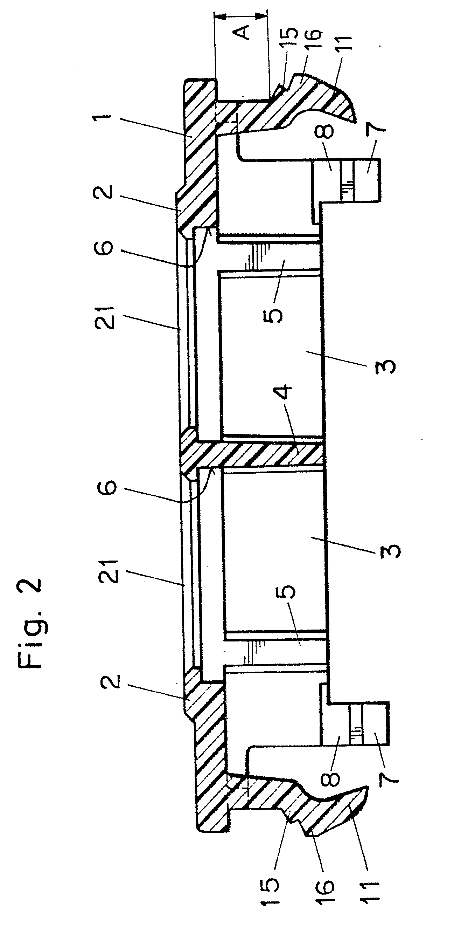

Fig. 2 einen Schnitt längs der Linie II–II in Fig. 1,

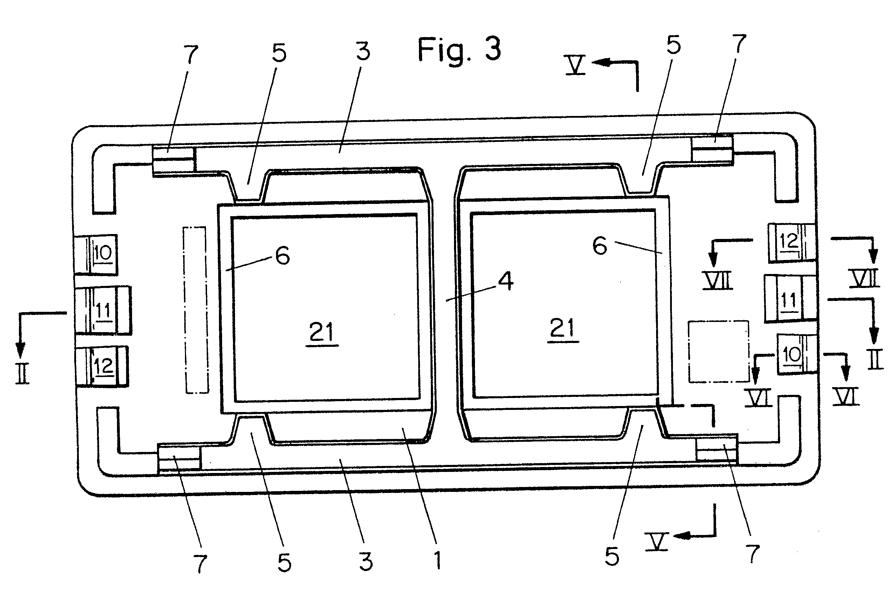

Fig. 3 eine Ansicht von hinten des Signalleuchtengehäuses nach Fig. 1,

Fig. 4 eine Seitenansicht eines Signalleuchtengehäuses nach Fig. 1 mit eingesetzter Printplatte,

Fig. 5 einen Schnitt längs der Linie V–V,

Fig. 6 einen Schnit längs der Linie VI–VI in Fig. 3,

Fig. 7 einen Schnitt längs der Linie VII–VII in Fig. 3 und

Fig. 8 die rechte Seite der Schnittdarstellung von Fig. 2 nach dem Einbau in die Frontwand einer Schalttafel und mit eingesetztem Print.

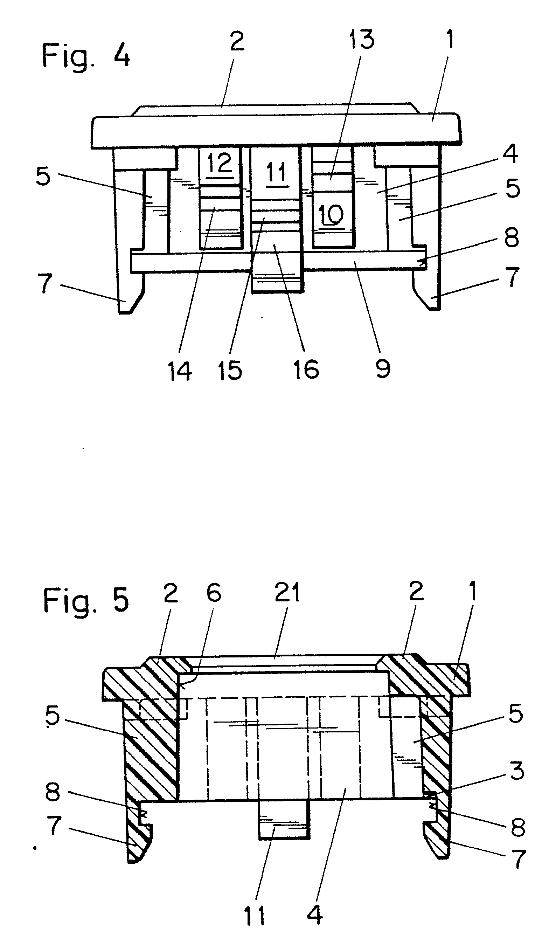

Das in der Zeichnung gezeigte Signalleuchtengehäuse weist eine flache Frontplatte 1 auf und ist mit zwei Durchbrechungen 21 versehen. Sie kann indessen auch nur eine Durchbrechung 21 oder aber mehr als zwei aufweisen, wobei sich die flächige Ausdehnung der Frontplatte 1 entsprechend verkleinern kann oder vergrössert. Die beiden Durchbrechungen 21 sind durch eine rahmenartige Rippe 2 umgeben. Hinter die Durchbrechungen 21 kommen die quaderförmigen Leuchtquellen zu liegen, die aus einer oder mehreren von einer lichtdurchlässigen Umhüllung umgebenen Leuchdioden zusammengesetzt und vorzugsweise auf eine zur Ebene der Frontplatte 1 parallele Printplatte 9 (in Fig. 4) aufgelötet sind. An der Rückseite ist die Frontplatte 1 mit zwei längsparallelen Rippen 3, die durch einen Quersteg 4 miteinander verbunden sind, versteift, welche Rippen 3 gleichzeitig als Abstandhalter für die Printplatte 9 (Fig. 4) dienen, die parallel zur Ebene der Frontplatte 1 in diese eingesetzt wird, Auf den einander zugewandten Seiten der Rippen 3 sind einander gegenüberliegend je zwei Zentriernocken 5 angeordnet, die zusammen mit dem Quersteg 4 der Zentrierung der beiden Lichtquellen dienen. Entlang den Rändern der Durchbrechungen 1 ist unterseitig eine Materialausnehmung 6 vorhanden, in welche die Lichtquellen mit ihren vordern Kanten zu liegen kommen und damit eine zusätzliche Zentrierwirkung ausüben. Zudem bewirken sie, dass die Lichtquellen näher an der Frontfläche der Frontplatte 1 liegen und von seitlich vorne besser sichtbar sind. An den Längsseiten sind weiter symmetrisch je zwei Rastschenkel 7 angeordnet, deren freies Ende keilförmig zuläuft und die über dem keilförmigen Ende eine Ausnehmung 8 für die Aufnahme der die Lichtquellen tragenden Printplatte 9 aufweist. Auf den Schmalseiten der Frontplatte 1 sind einander gegenüberliegend je drei Rastfedern 10, 11 und 12 vorhanden.

Es können aber auf jeder Seite nur zwei oder auch mehr als drei solcher Rastfedern vorhanden sein. Diese sind vorzugsweise, mit Ausnahme von einer (11) nicht länger als die Höhe der Zentriernocken 5, damit sie im Bedarfsfall unter die Printplatte 9 zurückgebogen werden können. Dadurch kann die Länge der Frontplatte 1 an jene der Printplatte 9 angeglichen werden.

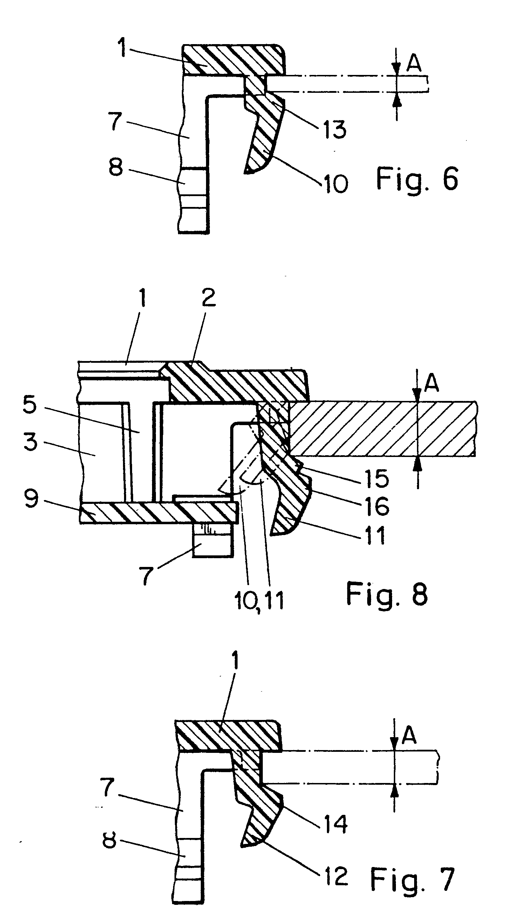

Jede der Rastfedern (10, 11, 12) weist wenigstens eine Rastnase 13 bis 16 mit unterschiedlichen Abständen A von der Frontplatte 1 auf, wobei die mittlere Rastfeder 11 mit zwei Rastnasen 15 und 16 versehen ist. Die Abstände A der Rastnasen 13 bis 16 von der Frontplatte 1 betragen vorzugsweise 2, 3 und 4 mm, wobei zwischen den Rastnasen 15 und 16 eine weitere Abstufung von 1 mm besteht. Dadurch kann das Signalleuchtengehäuse in entsprechende Durchbrechungen in die Schalttafelfrontwand bildenden Schalttafelblechen von 1 bis 5 mm Dicke eingesetzt werden. Ist das Schalttafelblech nur 1 mm dick (Fig. 6), ragen die anderen Rastfedern ohne Verformung über die Blechrückseite hinaus. Ist aber das Schalttafelblech 4 oder 5 mm dick, kommen die Rastnasen 15 oder 16 der Rastfeder 11 zum Eingriff. Die kürzeren Rastfedern 10 und 12 dagegen werden zurückgebogen (wie dies strichpunktiert in Fig. 8 angedeutet ist) und drücken elastisch federnd gegen die Wand der Ausnehmung im Schalttafelblech. Dadurch werden allfällige Masstoleranzen der Ausnehmungen im Schalttafelblech ausgeglichen, und das Signalleuchtengehäuse hält auch bei Übermass der Ausnehmung spielfrei. Je dicker die Schalttafelbleche sind, um so grösser werden die Masstoleranzen für die Durchbrechungen, und um so notwendiger wird der Toleranzausgleich durch die kürzeren Rastfedern.

Das vorstehend angegebene Abstufungsmass von 1 mm für die Rastnasen 13 bis 16 ist nur beispielsweise angeführt, da auch beliebige andere Abstufungen gewählt werden können.

Die Frontplatte 1 wird vorzugsweise nicht vollständig eben, sondern zwischen den gegenüberliegenden Rastfedern 10, 11, 12 leicht durchgebogen ausgeführt, so dass sie, von der Frontseite her gesehen, leicht konkav ist. Die Durchbiegung beträgt vorzugsweise 0,1–0,5 mm. Dadurch wird beim Einsetzen der Frontplatte in eine Schalttafel ein sauberer und bleibender Randabschluss gegenüber der Schalttafelfrontplatte erreicht.

Es ist indessen auch möglich, die Frontplatte 1 durchgehend geschlossen auszuführen und lediglich als Abdeckung von Durchbrechungen in Schalttafeln zu verwenden, die vorsorglich in der Schalttafel angebracht wurden, um bei einer späteren Erweiterung zusätzliche Schalt- und/oder Meldegeräte anbringen zu können.

## Patentansprüche

1. Signalleuchtengehäuse zum Einsetzen in eine Durchbrechung in einer Geräte-, Apparate- oder Schalttafelfront, welches Signalleuchtengehäuse eine Frontplatte (1) mit mindestens einer Durchbrechung (21) für eine Lichtquelle und zwei Rastfederpaare (10, 11, 12) zum Befestigen in der Durchbrechung aufweist, wobei die Rastfedern (10, 11, 12) unmittelbar an der Frontplattenrückseite (1) befestigt sind und sich dornartig von dieser weg nach hinten erstrecken, dadurch gekennzeichnet, dass die an den Rastfedern (10, 11, 12) als Rastnasen ausgebildeten Raststellen (13 bis 16) von Paar zu Paar unterschiedlich von der Frontplatte (1) entfernt sind.

2. Signalleuchtengehäuse nach Anspruch 1, dadurch gekennzeichnet, dass die Rastfedern (10, 11, 12) bei mindestens einem der beiden Rastfederpaare (11) zwei Raststellen (15, 16) mit einem anderen Abstand zur Frontplatte (1) als die Raststellen (13, 14) der anderen Rastfederpaare (10, 12) aufweisen.

3. Signalleuchtengehäuse nach Anspruch 1, dadurch gekennzeichnet, dass an der Frontplattenrückseite mindestens ein weiteres Rastfederpaar (7) für die zur Frontplatte (1) parallele Halterung einer die Lichtquelle tragenden Printplatte (9) aufweist.

4. Signalleuchtengehäuse nach Anspruch 3, dadurch gekennzeichnet, dass mit Ausnahme des längsten Rastfederpaares (11) alle übrigen der Befestigung des Signalleuchtengehäuses dienenden Rastfedern (10, 12) bei eingesetzter Printplatte 1 unter diese zurückbiegbar sind.

5. Signalleuchtengehäuse nach einem der Ansprüche 1 bis 4, dadurch gekennzeichnet, dass von der Frontseite her gesehen, die Frontplatte zwischen den einander gegenüberliegenden Rastfedern (10, 11, 12) konkav gewölbt ist, wobei die Wölbungstiefe 0,1 bis 0,5 mm beträgt.

## Revendications

1. Boîtier de signalisation lumineux devant être introduit dans une découpure pratiquée dans le panneau frontal d'un instrument, d'un appareil ou d'un tableau de distribution, ledit boîtier de signalisation lumineux comportant une plaque frontale (1) pourvue d'au moins une découpure (21) pour une source lumineuse et au moins deux paires de crans élastiques (10, 11, 12) à fixer dans la découpure, les crans élastiques (10, 11, 12) étant fixés directement à l'arrière de la plaque frontale (1) et s'étendant vers l'arrière à partir de celle-ci à la façon d'une broche, caractérisé en ce que les positions de crantage (13 à 16) réalisés sous la forme d'ergots de crantage sur les crans élastiques (10, 11, 12) sont à une distance différente de la plaque frontale (1), d'une paire à l'autre.

2. Boîtier de signalisation lumineux selon la revendication 1, caractérisé en ce que les crans élastiques (10, 11, 12) comportent, pour l'une au moins des deux paires de crans élastiques (11), deux points de crantage (15, 16) situés à une distance de la plaque frontale (1) différente des points de crantage (13, 14) des autres paires de crans élastiques (10, 12).

3. Boîtier de signalisation lumineux selon la revendication 1, caractérisé en ce qu'à l'arrière de la plaque frontale, il comporte au moins une autre paire de crans élastiques (7) pour la fixation parallèle à la plaque frontale (1) d'une plaquette à circuits imprimés (9) portant la source lumineuse.

4. Boîtier de signalisation lumineux selon la revendication 3, caractérisé en ce qu'à l'exception de la paire de crans élastiques la plus longue (11), tous les autres crans élastiques (10, 12) servant à la fixation du boîtier de signalisation lumineux peuvent être repliés élastiquement sous ceux-ci, lorsque la plaquette de circuits imprimés 1 est insérée.

5. Boîtier de signalisation lumineux selon l'une des revendications 1 à 4, caractérisé en ce que, selon une vue de la face, la plaque frontale a une surface concave entre les crans élastiques (10, 11, 12) se faisant face, la profondeur de la concavité étant de 0,1 à 0,5 mm.

## Claims

1. Indicating light housing for insertion in an aperture in the front of an instrument or apparatus or control panel, which indicating light housing has a front plate (1) with at least one aperture (21) for a light source and two pairs of catch springs (10, 11, 12) for fixing in the aperture, the catch springs (10, 11, 12) being secured directly on the rear side of the front plate (1) and extending like pins rearwards away from said plate, characterised in that the catch elements (13 to 16) constructed as catch noses on the catch springs (10, 11, 12) are situated at distances from the front plate (1) which vary from pair to pair.

2. Indicating light housing according to claim 1, characterised in that at at least one of the two pairs of catch springs (11) the catch springs (10, 11, 12) comprise two catch elements (15, 16) situated at a distance from the front plate (1) different from that of the catch elements (13, 14) of the other pairs of catch springs (10, 12).

3. Indicating light housing according to claim 1, characterised in that the rear side of the front plate has at least one further pair of catch springs (7) for holding, parallel to the front plate (1), a printed circuit board (9) supporting the light source.

4. Indicating light housing according to claim 3, characterised in that with the exception of the longest catch spring pair (11) all the other catch springs (10, 12) used for the fixing of the indicating light housing are adapted to be bent back under the printed circuit board 1 when the latter ist fitted.

5. Indicating light housing according to one of claims 1 to 4, characterised in that, as viewed from the front, the front plate is curved concavely between the mutually oppositely situated catch springs (10, 11, 12), the depth of curvature amounting to 0.1 to 0.5 mm.

Fig. 1

0 129 087

# Fig. 2

Fig. 3

Fig. 4

Fig. 5

Fig. 6

Fig. 8

Fig. 7